# EUROPEAN PATENT SPECIFICATION

(11) **EP 0 863 602 B1**
(45) Date of publication and mention of the grant of the patent: **28.08.2002**
(21) Application number: 98108137.5
(22) Date of filing: 21.11.1995
(51) Int. Cl.: H02K 11/02

(54) **A rotor for an electric motor**
Läufer für einen Elektromotor
Rotor pour moteur électrique

(30) Priority: 24.11.1994 GB 9423689
(43) Date of publication of application: 09.09.1998
(62) Divisional of application: 95308323.5
(73) Proprietor: JOHNSON ELECTRIC S.A., CH-2300 La Chaux-de-Fonds (CH)
(72) Inventor: Lau, James Ching Sik, North Point, Hong Kong (CN); Ho, Seung Pun, Greenwood Terrace, Chaiwan, Hong Kong (CN)
(74) Representative: Higgins, Michael Roger

(56) References cited:
- GB-A- 2 063 577
- GB-A- 2 202 688
- GB-A- 2 224 165
- PATENT ABSTRACTS OF JAPAN vol. 007, no. 099 (E-172), 27 April 1983 & JP 58 022569 A (MATSUSHITA DENKO KK), 9 February 1983
- PATENT ABSTRACTS OF JAPAN vol. 009, no. 023 (E-293), 30 January 1985 & JP 59 169351 A (MATSUSHITA DENKO KK), 25 September 1984

## Description

This invention relates to rotors for electric motors and in particular, to rotors for miniature permanent magnet direct current (PMDC) motors incorporating capacitors for suppression of electrical noise.

Commutators are a major source of electrical noise in miniature PMDC motors. As the brushes transfer from one segment to another, sparks are produced which create electrical noise and increase wear of the commutator and brushes. By suppressing these sparks, the noise level can be reduced and the service life of the motor increased. Varistor or resistor rings may be fitted to the commutator, usually by soldering to tangs used for connecting the winding of the rotor to the commutator, for suppressing these sparks. See for example, GB 2202688.

It is known from GB 2224165 to provide a noise suppression arrangement in the form of a resistor ring. Each terminal portion comprises an insulation-displacing mechanical-connection type terminal electrically connecting the commutator segment to the rotor winding accommodated in a crown and the commutator segments directly contact the noise suppression arrangement.

Alternatively, capacitors and/or chokes may be connected to the motor terminals, usually inside the motor end cap or on the brush mounting plate, to suppress the transmission of the noise to the motor's power supply.

However, better noise suppression has been achieved by connecting capacitors directly to the winding of the rotor. The capacitors may have one lead connected together to form a star point and the other lead connected to a respective commutator tang, there being an equal number of capacitors and poles of the rotor. A known arrangement is shown in GB 2246913 in which the capacitors are electrolytic type capacitors disposed within the winding tunnels of the rotor with the star point connected at the opposite end of the rotor to the commutator.

While this functions satisfactorily, it has certain drawbacks. It is not particularly suited to automated assembly and as the capacitors are of significant size, this technique cannot be used where the winding tunnels are relatively full of wire.

JP-A-58022569 describes the use of chip-type capacitors for noise suppression mounted on a rotor to overcome the size problem. The chip-type capacitors are mounted in slots formed in a printed circuit board with conductive tracks formed on the board to enable the capacitors to be connected in star or delta. One terminal face of each capacitor is soldered to a respective commutator tang.

One problem with having the capacitors mounted to a fixed plate such as a printed circuit board is that the gap between the commutator tangs and the terminal faces of the capacitors cannot be controlled. The size of the gap is important for making a good soldered connection. If the gap is too big, then too much solder is required to bridge the gap making it difficult to achieve a good electrical connection. If the gap is too small, there is difficulty in fitting the capacitor assembly to the commutator. However, there is a large tolerance on the length of the chips and the radial extent of the tangs after hot staking varies considerably.

The present invention seeks to overcome the problems by providing a wound rotor with a chip capacitor noise suppression arrangement in which it is easy to connect the capacitor to the commutator segments with or without soldering.

Accordingly, the present invention provides a rotor for an electric motor comprising: a shaft, an armature core having a plurality of poles, fitted on the shaft, a rotor winding wound around the poles of the armature core, a commutator fitted to the shaft, the commutator comprising a plurality of commutator segments, each commutator segment having a contact portion for making sliding contact with a brush and a terminal portion for making electrical connection with the rotor winding, each terminal portion having an insulation-displacing mechanical-connection type terminal electrically connecting the commutator segments to the rotor winding, and a commutator base having a segment support portion and a crown having a plurality of first recesses each receiving the terminal portion of a respective commutator segment characterised in that the rotor further comprises a capacitive noise suppression arrangement comprising a plurality of chip-type capacitors, each having a first terminal face and a second terminal face and a conductive member electrically contacting each of the first terminal faces of the capacitors to form a common connection, and in that the crown has a plurality of second recesses, each receiving a respective capacitor and the terminal portions of the commutator segments each have a finger which directly contacts the second terminal face of a respective capacitor.

Preferably, the capacitors are orientated axially with respect to the shaft.

Alternatively, the capacitors are orientated radially and the second faces of the capacitors bear directly onto the fingers under the resilient urgings of the conductive member.

The recesses may extend radially outwardly from the terminal portions as this allows the resilient conductive member to urge the capacitors into contact with the terminal portions while securely locating the capacitors.

Preferably, the conductive member is at least a part of a resilient ring. The capacitors may be soldered to this ring as this facilitates assembly in some applications and gives a reliable self supporting connection between the capacitors and the conductive member.

Preferred embodiments of the invention will now be described, by way of example only, with reference to the accompanying drawings, in which:
Figure 1 is a schematic cross-section of a partly assembled commutator having a solder-free terminal portion, according to a first embodiment;
Figure 2 is an end view of the assembled commutator of Figure 1 but with a retaining ring omitted for clarity;
Figure 3 is an isometric view of a segment of the commutator of Figures 1 and 2;
Figure 4 is a blank for forming the segment of Figure 3;
Figure 5 is a cross-section of a commutator assembly showing a variation to the arrangement of Figure 1; and
Figure 6 is an end view of the commutator assembly of Figure 5.

The figures illustrate a mechanical connection or solderless type commutator such as that described in US Patent specification 4584498. In this type of commutator, the commutator base has a segment support portion 34, a spacer portion 36 and a crown 50. The crown has recesses 51 for accommodating the terminal portion 38 of the commutator segments 32 as well as slots 52 for receiving the lead wires of the rotor winding for connection to the commutator segments 32.

In addition, the crown has further recesses 53, radially outward of the terminal recesses 51, for accommodating chip-type capacitors 44. The top of the capacitor recesses 53 has a slot 54 for receiving a wire ring 47. The capacitors 44 are placed axially into the capacitor recesses 53 and the wire ring is resiliently brought to bear on the capacitors' terminal face 45. As shown, the wire ring 47 bears resiliently on the radially outer edge of the terminal face 45 although of course the wire ring could be soldered to terminal face 45 with suitable modifications made to the capacitor recesses 53 to accommodate the wire ring 47. The capacitors 44 are held in the capacitor recesses 53 by the commutator segments assisted by retaining ring 33, if fitted.

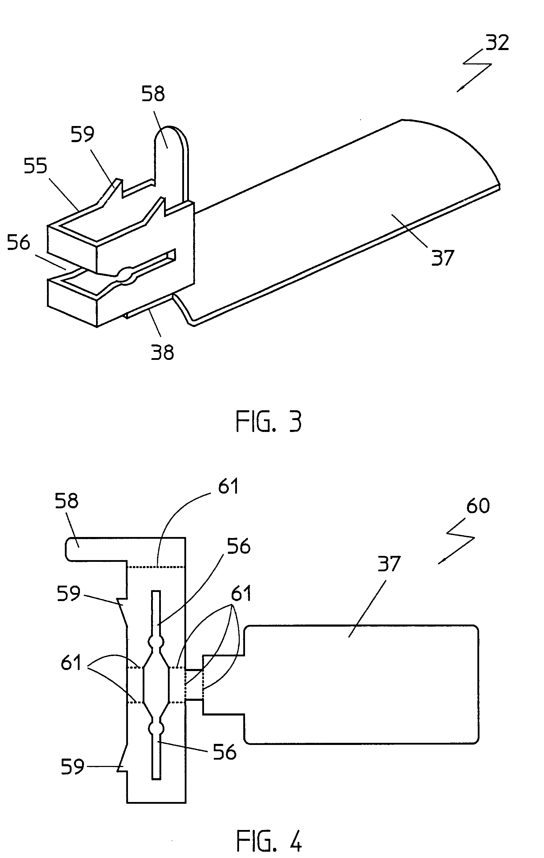

The commutator segments 32, as shown more clearly in Figure 3, have a sliding portion 37, for making sliding contact with brushes of the motor, and a terminal portion for connecting with the rotor windings. The terminal portion 38 is formed with a mechanical connection or insulation displacing connection type terminal 55. This terminal 55 is accommodated within one of the terminal recesses 51 of the crown. The terminal is box-like with an open top and having a slot 56 cut through the forward face and along the two side faces. The slot 56 is wider in the front face of the terminal than along the side faces to accommodate an anvil 57 formed within the terminal recesses 51 for supporting the lead wire of the rotor winding as the terminal 55 is inserted into the crown 50. The slots 56 straddle and grip the lead wire as the terminal 55 is inserted, at the same time slicing through the insulation of the wire to make electrical contact therewith.

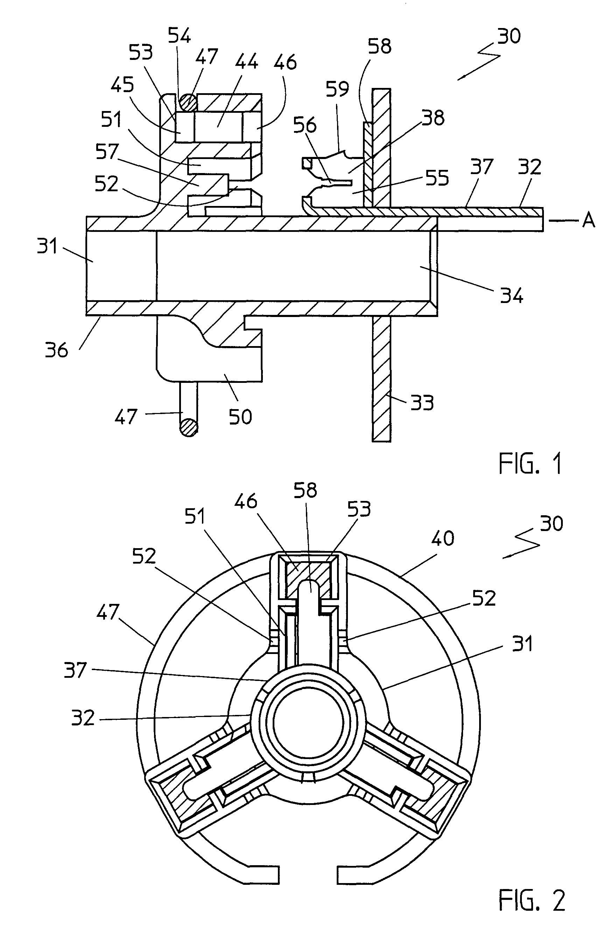

A finger 58 extends radially from the rear wall of the terminal 55 for making contact with a respective capacitor 44. As shown in Figure 1, a retaining ring 33 retains the segments on the commutator base and at the same time, supports the fingers 58. Barbs 59 formed on the terminals engage with walls of the recesses 51 to resist withdrawal of the terminals from the crown once fitted. The commutator segments 32 are fitted to the base by mounting the segments on the base 31 as shown in Figure 1 and then moved in the direction indicated by arrow "A" to insert the terminals 55 into the recesses 51 in the crown 50.

The retaining ring 33 has been omitted from Figure 2 for clarity from which it can be seen that the fingers 58 extend radially to make contact with the terminal faces 46 of the capacitors 44.

Figure 4 shows a blank for forming the commutator segment 32 shown in Figure 3. The blank 60 is cut from a sheet of suitable material such as beryllium copper and folded along the five fold lines 61 to form the commutator segment of Figure 3. The sliding portion 37 is curved during forming so that the sliding portions of the assembled commutator form a barrel-like cylindrical sliding contact surface.

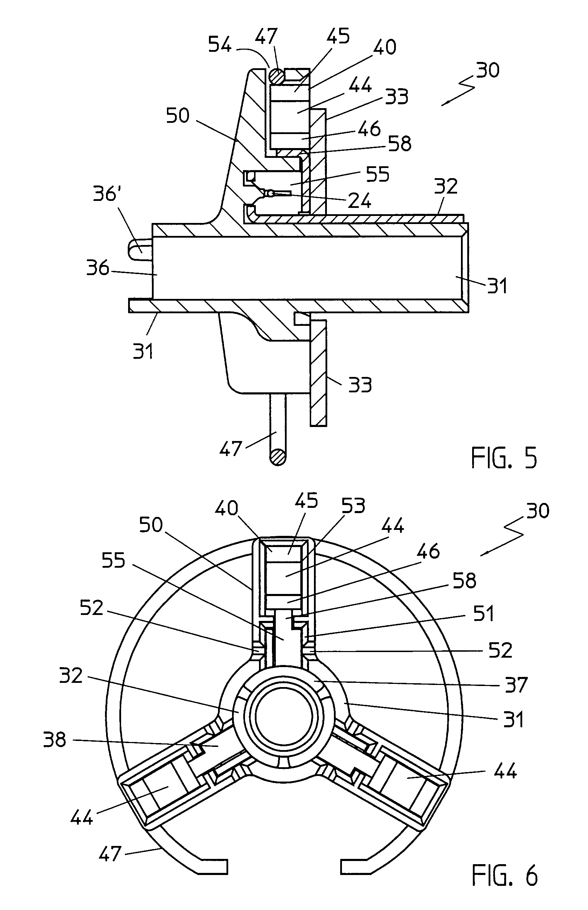

The embodiment of Figures 5 and 6 is similar to that of Figures 1 and 2 with the exception that the capacitors 44 extend radially. In this arrangement, the fingers 58 are bent to extend axially into the capacitor recesses 53. The capacitor recesses may be open at the front and radially outer sides. Alternatively, the front sides may be closed with a slot for the fingers and/or the radially outer sides may simply have a slot for accommodating the wire ring 47. As previously, the wire ring may be soldered to the outer terminal face 45 or if suitably guided by the crown, may be sprung to make direct electrical contact while at the same time, resiliently urging the capacitor into radial contact via its inner terminal face 46 with the finger 58 of the commutator segment, thereby creating a totally solder free noise suppressed commutator assembly.

Various modifications may be made to the embodiments described and it is desired to include all such modifications as fall within the scope of the invention as defined in the accompanying claims. For example, the wire ring may or may not be soldered to the capacitors and the capacitors may or may not be soldered to the commutator segments. While in the embodiments, the capacitors have been shown as being placed radially outward of the terminal portions of the commutator segments, if space permits, the capacitors could be mounted in direct contact with the sliding portions of the commutator segments or accommodated within the terminal recesses of the crown. While for clarity of description, a 3 slot commutator has been illustrated, commutators of other configurations may be used.

## Claims

1. A rotor for an electric motor comprising:
a shaft;
an armature core having a plurality of poles, fitted on the shaft;
a rotor winding wound around the poles of the armature core;
a commutator (30) fitted to the shaft, the commutator comprising a plurality of commutator segments (32), each commutator segment (32) having a contact portion (37) for making sliding contact with a brush and a terminal portion (38) for making electrical connection with the rotor winding, said terminal portion (38) having
an insulation-displacing mechanical-connection type terminal (55) electrically connecting the commutator segments (32) to the rotor winding, and a commutator base (31) having a segment support portion (34) and a crown (50) having a plurality of first recesses (51) each receiving the terminal portion (38) of a respective commutator segment (32)
**characterised in that** the rotor further comprises:
a capacitive noise suppression arrangement (40) comprising a plurality of chip-type capacitors (44), each having a first terminal face (45) and a second terminal face (46); and
a conductive member (47) electrically contacting each of the first terminal faces (45) of the capacitors (44) to form a common connection, and **in that**
the crown (50) has a plurality of second recesses (53), each receiving a respective capacitor (44); and
the terminal portions (38) of the commutator segments (32) each have a finger (58) which directly contacts the second terminal face (46) of a respective capacitor.

2. A rotor as defined in claim 1, wherein the capacitors (44) are orientated radially with respect to the shaft and wherein the second faces (46) of the capacitors (44) bear directly onto the fingers (58) under the resilient urging of the conductive member (47).

3. A rotor as defined in claim 1 or claim 2, wherein the recesses (53) extend radially outwardly from the terminal portions (38).

4. A rotor as defined in claim 1, wherein the capacitors (44) are orientated axially with respect to the shaft and held in recesses (53) formed in the crown (50) by the fingers (58).

5. A rotor as defined in any one of the preceding claims, wherein a flexible adhesive assists in retaining the capacitors (44) in the recesses (53).

6. A rotor as defined in any one of the preceding claims, wherein the first terminal faces (45) of the capacitors (44) are soldered to the conductive member (47).

7. A rotor as defined in any one of the preceding claims, wherein the conductive member (47) forms at least a part of a resilient ring.

## Patentansprüche

1. Läufer für einen Elektromotor, umfassend:
eine Welle;
einen Ankerkern mit einer Vielzahl von Polen, die auf der Welle angebracht sind;
eine Läuferwicklung, die um die Pole des Ankerkerns herum gewickelt sind;
einen Kommutator (30), der an der Welle angebracht ist, wobei der Kommutator eine Vielzahl von Kommutatorsegmenten (32) umfasst, wobei jedes Kommutatorsegment (32) einen Kontaktabschnitt (37) zum Bilden eines Gleitkontakts mit einer Bürste und einen Anschlussabschnitt (38) zum Bilden einer elektrischen Verbindung mit der Läuferwicklung aufweist, wobei der Anschlussabschnitt (38) einen Anschluss (55) eines Isolations-verschiebenden Typs mit einer mechanischen Verbindung aufweist, der die Kommutatorsegmente (32) mit der Läuferwicklung elektrisch verbindet, und eine Kommutatorbasis (31) mit einem Segmenthalterungsabschnitt (34) und einer Krone (50) mit einer Vielzahl von ersten Ausnehmungen (51), die jeweiligen den Anschlussabschnitt (38) eines jeweiligen Kommutatorsegments (32) aufnehmen;
**dadurch gekennzeichnet, dass** der Läufer ferner umfasst:
eine kapazitive Störsignalunterdrückungs-Anordnung (40) umfassend eine Vielzahl von Chip-Typ-Kondensatoren (44), die jeweils eine erste Anschlussendfläche (45) und eine zweite Anschlussendfläche (46) aufweisen; und
ein leitendes Element (47), welches jede der ersten Anschlussendflächen (45) der Kondensatoren (44) elektrisch kontaktiert, um eine gemeinsame Verbindung zu bilden, und dass
die Krone (50) eine Vielzahl von zweiten Ausnehmungen (53) aufweist, die jeweils einen jeweiligen Kondensator (44) aufnehmen; und
die Anschlussabschnitte (38) der Kommutatorsegmente (32) jeweils einen Finger (58) aufweisen, der die zweite Anschlussendfläche (46) eines jeweiligen Kondensators direkt kontaktiert.

2. Läufer nach Anspruch 1, wobei die Kondensatoren (44) radial bezüglich der Welle orientiert sind und wobei die zweiten Endflächen (46) der Kondensatoren (44) direkt auf den Fingern (58) unter der federnden Druckwirkung des leitenden Elements (47) anliegen.

3. Läufer nach Anspruch 1 oder Anspruch 2, wobei sich die Ausnehmungen (53) radial von den Anschlussabschnitten (38) nach außen erstrecken.

4. Läufer nach Anspruch 1, wobei die Kondensatoren (44) axial bezüglich der Welle orientiert und in Ausnehmungen (53), die in der Krone (50) gebildet sind, durch die Finger (58) gehalten werden.

5. Läufer nach irgendeinem der vorangehenden Ansprüche, wobei ein flexibles Klebemittel das Halten der Kondensatoren (44) in den Ausnehmungen (53) unterstützt.

6. Läufer nach irgendeinem der vorangehenden Ansprüche, wobei die ersten Anschlussendflächen (45) der Kondensatoren (44) an dem leitenden Element (47) angelötet sind.

7. Läufer nach irgendeinem der vorangehenden Ansprüche, wobei das leitende Element (47) wenigstens einen Teil eines federnden Rings bildet.

## Revendications

1. Rotor pour moteur électrique comprenant:
un arbre;
un noyau d'induit comportant une pluralité de pôles, monté sur l'arbre;
un enroulement de rotor enroulé autour des pôles du noyau d'induit;
un collecteur (30) ajusté à l'arbre, le collecteur comprenant une pluralité de segments de collecteur (32), chaque segment de collecteur (32) comportant une partie de contact (37) pour réaliser un contact à glissement avec un balai et une partie terminale (38) pour réaliser une connexion électrique avec l'enroulement de rotor, ladite partie terminale (38) comportant une borne de type à connexion mécanique autodénudante (55) reliant électriquement les segments de collecteur (32) à l'enroulement de rotor, et une base de collecteur (31) comportant une partie de support de segment (34) et une couronne (50) comportant une pluralité de premiers évidements (51) recevant chacun la partie terminale (38) d'un segment de collecteur respectif (32)
**caractérisé en ce que** le rotor comprend en outre:
un dispositif de suppression de parasites capacitif (40) comprenant une pluralité de condensateurs (44) de type intégré, présentant chacun une première face terminale (45) et une seconde face terminale (46); et
un élément conducteur (47) en contact électrique avec chacune des premières faces terminales (45) des condensateurs (44) pour former une connexion commune, et **en ce que**
la couronne (50) comporte une pluralité de seconds évidements (53) recevant chacun un condensateur respectif (44); et
chacune des parties terminales (38) des segments de collecteur (32) possède un doigt (58) en contact direct avec la seconde face terminale (46) d'un condensateur respectif.

2. Rotor selon la revendication 1, dans lequel les condensateurs (44) sont disposés radialement par rapport à l'arbre et dans lequel les secondes faces (46) des condensateurs (44) s'appuient directement sur les doigts (58) sous la sollicitation élastique de l'élément conducteur (47).

3. Rotor selon la revendication 1 ou la revendication 2, dans lequel les évidements (53) s'étendent radialement vers l'extérieur des parties terminales (38).

4. Rotor selon la revendication 1, dans lequel les condensateurs (44) sont disposés radialement par rapport à l'arbre et sont maintenus dans les évidements (53) formés dans la couronne (50) par les doigts (58).

5. Rotor selon l'une quelconque des revendications précédentes, dans lequel un adhésif souple aide à retenir les condensateurs (44) dans les évidements (53).

6. Rotor selon l'une quelconque des revendications précédentes, dans lequel les premières faces terminales (45) des condensateurs (44) sont brasées à l'élément conducteur (47).

7. Rotor selon l'une quelconque des revendications précédentes, dans lequel l'élément conducteur (47) forme au moins une partie d'un anneau élastique.
